# EUROPEAN PATENT APPLICATION

(11) **EP 4 070 659 A1**
(43) Date of publication of application: **12.10.2022**
(21) Application number: 19954715.9
(22) Date of filing: 02.12.2019
(51) Int. Cl.: A01N 65/16, A01N 43/16, A61K 31/05

(54) **COMPOSITION RICH IN POLYPHENOLS AND FLAVONOIDS FOR USE AS A BIOSTIMULANT AND ANTIMICROBIAL FOR USE IN AGRICULTURE**

(71) Applicant: Botanitec SPA, Santo Domingo Valparaíso (CL)
(72) Inventor: LEYTON, Allison, Valparaíso (CL); VAISMAN, Daniela, Valparaíso (CL)
(74) Representative: Elzaburu S.L.P.
(86) International application number: PCT/CL2019/050128
(87) International publication number: WO 2021/108932

(57) **Abstract**

The present invention relates to compositions of natural origin for use in agricultural crops (vegetables and fruit trees), particularly for use in biostimulant formulations and/or with antimicrobial action, which allow crops to be protected from stress, improving the quality and yield of plants and/or their fruits.

The invention provides a biostimulant and/or antimicrobial composition comprising extracts made from plants that include berry leaves rich in polyphenols, flavonoids, and micronutrients. In a preferred embodiment of the invention, the composition comprises extracts made from blueberry leaves. A process for making said composition is also provided.

## Description

### TECHNICAL FIELD

The invention provides compositions with biostimulant activity made from plant extracts, preferably berry leaves. The composition, prepared according to the present invention, allows formulations to be prepared for its use in agricultural crops and has antimicrobial activity against various pathogens.

### BACKGROUND

Agriculture faces constant demand for products for human consumption, animal, or as raw material for various industries. This is a constant challenge to achieve quality production with good performance.

Dealing with the challenges of the agricultural industry, aiming preventing soil depletion and increasing productivity, the use of manures, fertilizers, amendments, improvers and/or other products for agricultural arises.

Among the products used to improve plant growth are biostimulants, which complement the nutrition and protection of crops. These are any substance or microorganism that, when applied to plants, improve the effectiveness in the absorption and assimilation of nutrients, its tolerance to biotic or abiotic stress, or other agronomic characteristics, regardless of the nutrient content of the substance. Products that contain mixtures of these substances or microorganisms are also considered a plant biostimulant. Biostimulants encompass various formulations for use directly on plants or trees, or to be applied to soil or irrigation water, to regulate and improve crops through various pathways, making them more efficient, resistant and of better quality.

Biostimulants are also compatible with agricultural and food practices that promote a low environmental impact of crops, in conjunction with offering healthy food products.

Regardless of the nutrient content of biostimulants, they help fertilizers to be more effective by providing essential elements to crops to make them more resistant. Biostimulant products (substances, microorganisms, or mixtures of them) are classified into the following categories: i) humic and fulvic acids; ii) protein hydrolysates, amino acids and peptide mixtures; iii) algae and plant extracts; iv) chitosan and other biopolymers; v) inorganic compounds; vi) fungi and beneficial bacteria, among others.

In addition, it is essential to decrease the use of chemically synthesized compounds, since trends of modern agriculture encourage to eliminate their use due to their environmental effects, on cultivated plants and, eventually, on human health. This trend is part of the concept of organic agriculture, which, according to the Food and Agriculture Organization (FAO), consists of ecosystem management, instead of the simple use of agricultural inputs. Thus, the use of synthetic fertilizers and pesticides, veterinary drugs, genetically modified seeds and species, preservatives, synthetic additives, and irradiation should be eliminated, opting for compatible mechanical, biological or cultural alternatives. Some organic agriculture management practices consider that local conditions will require systems, products and/or solutions tailored specifically for the region where they are to be applied or implemented.

Within the incentives for organic agriculture, others than the preferences of consumers who increasingly demand more organic products, there are subsidies to reduce the contamination of groundwater and soil, or promote biodiversity, as is the case of the European Union. Farmers are also keen for looking for sustainable methods to improve their own and their family's health, together with future benefits of reduced costs through economies of scale, once organic farming achieves a higher market share.

In the state of the art there are various developments in the line of plant extracts for various purposes, particularly as biostimulants, obtained by methods oriented towards organic agriculture.

For example, document WO2010051814A1, although it is a product for the food industry and not a biostimulant for plants, indicates that it corresponds to an extract in water, alcohol, or a mixture of both, used as natural additive obtained from of leaves or fruits of various species of berries, for their content of polyphenols, tannins and other compounds with antioxidant, anti-inflammatory, antibacterial and antiviral properties. The invention described in the document, being directed to an antioxidant additive for use in food, does not suggest biostimulant actions in plants, it is a nutritional supplement with action as a growth promoter for use in pet food, characterized by the presence of tannins, compounds absent in the present invention.

Document CN105497101A describes a methodology where extracts are made from blueberry stems or leaves, which can be fresh or previously dried and crushed. It would be a low-cost process. However, the process contemplates extraction with ethanol, extraction with water, enzymatic hydrolysis, macroporous resin adsorption, membrane separation and the use of ultrasound or microwaves. The process described in that document could be carried out using an extraction in purified or deionized water at 50-60ºC, performing the extraction 2-3 times, followed by ultrafiltration, dialysis and lyophilization. The extracts described in this publication are aimed to applications in the food and cosmetic industry, indicating that blueberry leaves contain polyphenols and flavonoids, without any suggestion of applications in other industries and even less of the potential as biostimulant or antimicrobial activity.

Publication US4309207 (A) presents an extract that can be obtained from blueberry leaves, among others. Although the expected effect of this extract is the inhibition of plant growth, particularly to inhibit seed germination, growth of seedlings and fungi (potentially fungicidal action). Extraction is performed with acetone and water, followed by numerous steps such as evaporation, acidification, washing, dissolution, for which a particular component profile would be expected. Therefore, since it is a growth inhibition-oriented composition, it would not be obvious to use it as a biostimulant in plants. Furthermore, the process to prepare the inhibitor extract contemplates its acidification, treatment with acetate, washing, separation of organic and aqueous phases, evaporation, and dissolution in solvent.

Document CN103211852A describes extracts of blueberry leaves that are aimed to eliminate free radicals, then the importance of this use focuses on avoiding damage to body tissues and cells that could cause chronic diseases and aging. The extraction process, although initially corresponds to an aqueous extraction, where the leaves were pulverized and mixed with hot water (decoction), it had additional stages of concentration in macro-porous resin and elution with ethanol. The eluted fraction is the one that shows the ability to scavenge free radicals. There is not mentioned that extracts have biostimulant properties or their use for application in plants.

In relation to document US5474774A, an extract made from plant raw material is presented, preferably from the fruit itself, enriched in polyphenols and flavonoids. Although an aqueous sample is mentioned, the extract is made with at least one stage that requires the use of an organic phase. The different uses for the extract are focused on the inhibition of bacteria adherence ability on various surfaces and various industries, but especially focused on oral care (rinses). The preferred plant raw material corresponds to cranberries, and it is indicated that the material could be a cranberry fruit, the possibility of making extracts from the leaves is not explicitly identified. There is also no explicit mention for its use in plants or as a biostimulant.

In the field of biostimulants, there are also compositions such as the one shown by Bulgari *et al.* (2017). There was shown biostimulants for use in plants improved growth, increased yield, and quality of them. Borage extract was used and sprayed on lettuce plants, improving various parameters, including biomass production, chlorophyll and the content of phenols and flavonoids. It was indicated that the levels of calcium and phenolic compounds in the extracts were measured. Borage extracts were made from flowers or leaves, which are crushed and macerated in water for 25 days at room temperature and in the dark, being subsequently filtered and diluted in water for foliar application. In this work berries and their leaves are not used, but only a borage-based composition was used exclusively.

Regarding what was described by Ertani *et al.,* the effect of plant extracts, including blueberry, on the growth of corn plants, where the extracts would contain compounds with biostimulant activity, was presented. It was also suggested that p-hydroxybenzoic acid (present in blueberry fruits) would have antifungal and antibacterial activity. Since in the case of the use of blueberry fruit extracts were analyzed, this document should not affect the novelty of the present invention. Because it is produced from the fruit and not the leaf of the blueberry plant, is rich in chlorogenic acid and hydroxybenzoic acid and lacking gallic acid and coumaric acid (not detected). In contrast, the composition of the present invention has a negligible concentration of chlorogenic acid, could contain hydroxybenzoic acid, and is especially rich in gallic acid, with a high presence of coumaric acid.

Finally, document US4308047A presents a method for applying an aqueous extract from previously dried oak leaves which were boiled in water to extract the soluble components. The extract is used as a biostimulant, indicating that it would contain tannins and natural waxes from oak leaves. Although it is indicated that it can be applied to clean the leaves of plants or the root, it is not explicitly mentioned that it can be used as a foliar biostimulant. It is further stated that the product can be used to clean various surfaces. Since there is no reference to blueberry leaves, this document would not affect the novelty of the invention.

### BRIEF DESCRITPION OF THE FIGURES

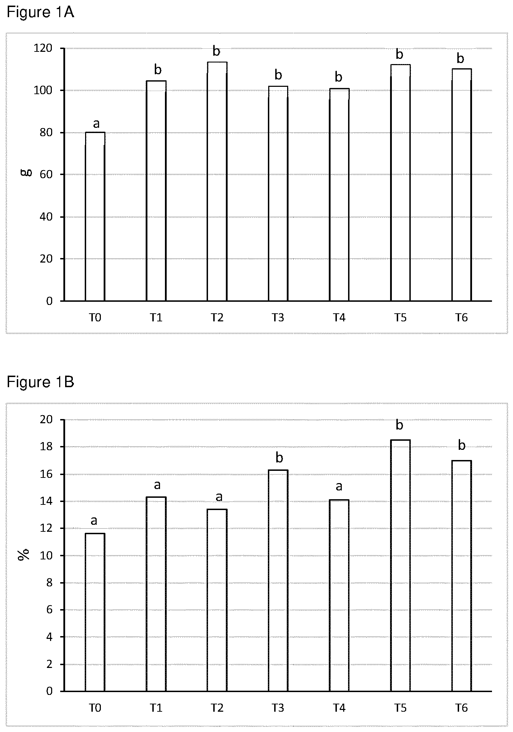

Figure 1. Results of Experiment 1A. Effect of the composition of the invention on the yield of hydroponic lettuce type Lollo bionda cv. *Dabi* under abiotic stress (poor growth). The experiment had 7 treatments of 6 applications each: Control treatment without application (T0); biostimulant based on *Macrocystis pyrifera* A at 3 L/ha (T1) and 1.5 L/ha (T2); biostimulant based on *Macrocystis pyrifera* B at 3 L/ha (T3) and 1.5 L/ha (T4); and the composition of the invention at 3L/ha (T5) and at 1.5 L/ha (T6). Figure 1A shows the results of the fresh weight of the plants in grams, and Figure 1B shows the percentages corresponding to the dry weight on the fresh weight. Different letters indicate significant differences (p value < 0.05).

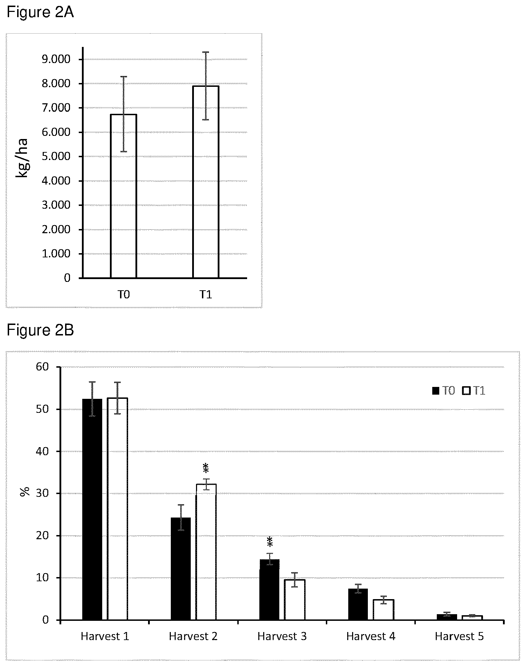

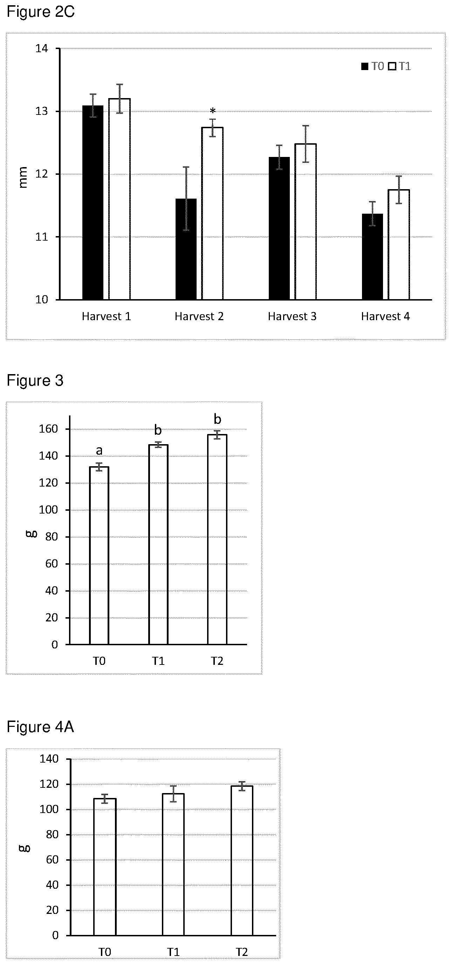

Figure 2. Results of Experiment 2. Effect of the composition of the invention on the yield and caliber of blueberries cv. *Duke.* The experiment had 2 treatments: Control treatment without application (T0); and 3 applications of the composition of the invention at 3 L/ha (T1). Figure 2A shows the quantification of the total crop yield in kg/ha; Figure 2B shows the yields on the 5 harvest dates in percentage yield with respect to the total harvest; and Figure 2C shows the average size of the fruits for the first 4 harvest dates (mm of the equatorial diameter of the fruit).
Figure 3. Results of Experiment 3. Effect of the composition of the invention on caliber of apples cv. *Cripps Pink* under abiotic stress (poor growth). The experiment had 3 treatments: Control treatment without application (T0); 4 applications of the composition of the invention at 3 L/ha (T1); and 8 applications of the composition of the invention at 3L/ha (T2). The size was determined based on the average weight of the fruit (g).

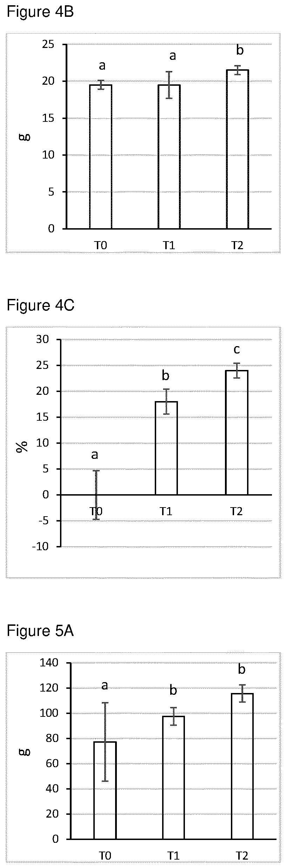

Figure 4. Results of Experiment 4. Effect of the composition of the invention on yield and quality of hydroponic lettuces type Lollo bionda cv. *Dabi* under heat stress. The applications were made the day before the stimulus (50°C for 4 hours). The experiment had 3 treatments: Control treatment without application (T0); 1 application of a commercial composition based on *Ascophyllum nodosum* at 3 L/ha (T1) and 1 application of the composition of the invention at 3 L/ha (T2). Fresh weight (g) is shown in Figure 4A. Figure 4B shows the dry weight (g). Figure 4C shows recovery from dehydration at week 1 post stress (%).

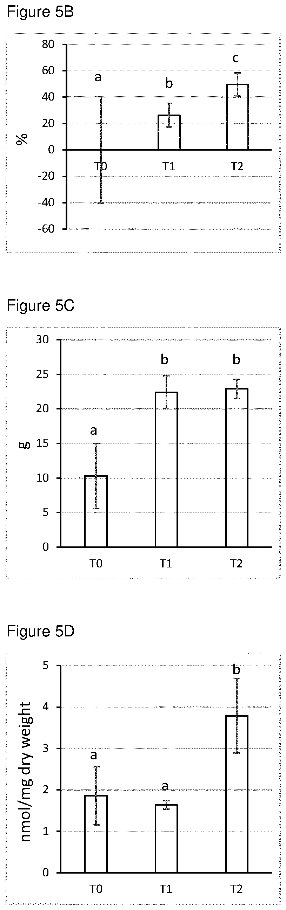

Figure 5. Results of Experiment 5. Effect of the composition of the invention on yield and quality of hydroponic lettuce type Lollo bionda cv. *Dabi* subjected to cold stress. The applications were made the day before the stimulus (-3°C for 4 hours). The experiment had 3 treatments: Control treatment without application (T0); 1 application of a commercial composition based on *Ascophyllum nodosum* at 3 L/ha (T1); and 1 application of the composition of the invention at 3 L/ha (T2). Fresh weight (g) is shown in Figure 5A. Figure 5B shows the difference in fresh weight of each treatment versus T0 (%). Figure 5C shows dry weight (g). Figure 5D shows the concentration of chlorophyll (nmol/mg dry weight).

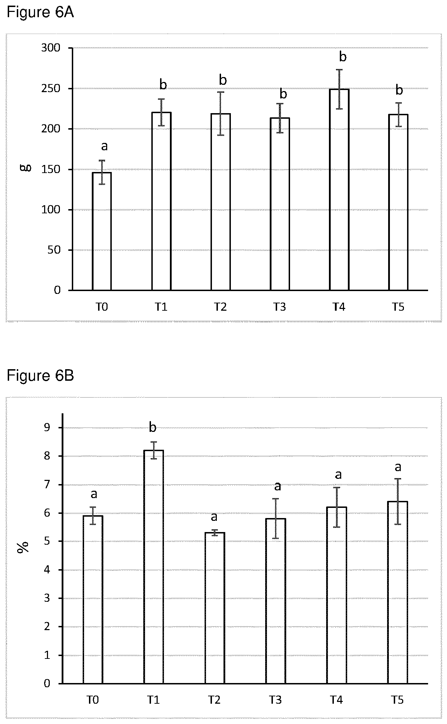

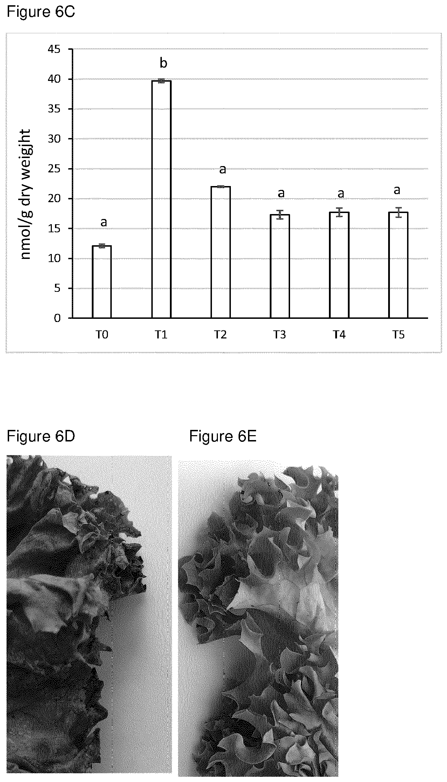

Figure 6. Results of Experiment 6. Effect of the composition of the invention on yield and quality of hydroponic lettuces type Lollo bionda cv. *Dabi* compared to other natural and synthetic compositions. The experiment had 6 treatments of 6 applications at 3L/ha each: Control treatment without application (T0); Composition of the Invention (T1); Composition 1 (same raw material, different process than the invention) (T2); Synthetic (synthetic composition based on gallic acid) (T3); Biortig (T4); and Composition 2 (same process, different raw material than the invention) (T5). Fresh weight (g) is shown in Figure 6A. Figure 6B shows dry weight relative to fresh weight (%). Figure 6C shows the concentration of chlorophyll (nmol/g dry weight). Figures 6D and 6E show photographs of the samples on day 21 at 5°C at T0 and T1, respectively (quantification of postharvest dehydration).

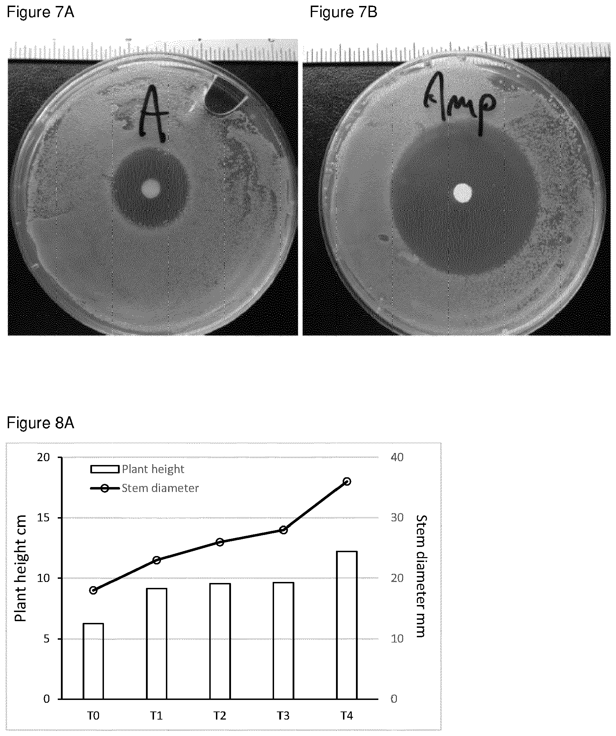

Figure 7. Inhibitory effect of the composition of the invention on *Escherichia coli.* Figure 7A shows the effect of the composition of the invention at a concentration of 100%; and Figure 7B shows the positive control corresponding to Ampicillin 0.1 g/L.

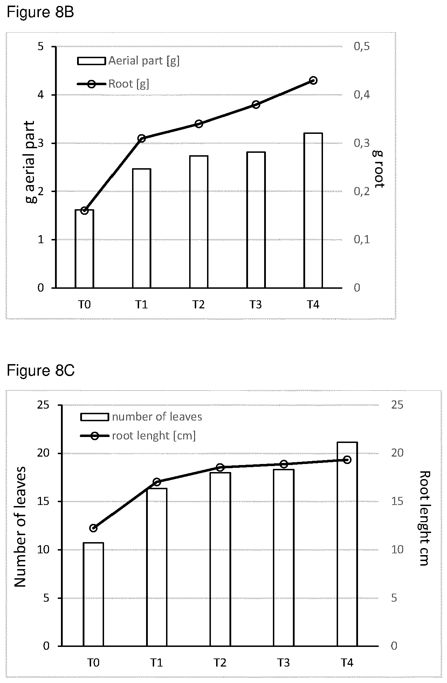

Figure 8. Results of Experiment 8. Effect of the composition of the invention on the quality variables of tomato plants cv. *Cal Ace.* The experiment had 5 treatments of 2 applications of the composition of the invention with a dilution of 2%: Control treatment without application (T0); without Bio-3 (T1); with Bio-3 at 25% (T2); with Bio-3 at 50% (T3); and with Bio-3 at 100% (T4). Figure 8A shows the height of the plant (cm) and the diameter of its stem (mm). Figure 8B shows the fresh weight of the aerial part of the plant (g) and its root (g). Figure 8C shows the number of leaves and the root length of the plant (cm).

### DETAILED DESCRITPION

The invention provides a composition based on plant extracts, enriched in antioxidants, carbohydrates, proteins, and micronutrients. All of them critical for the growth and protection of plants against abiotic stress, minimizing its effect, favoring its recovery, quality and growth of the plant and its fruits. The administration of the composition to vegetables and fruit trees increases the yield in dry, fresh weight of the plant and/or the rooting of the plants and may even increase the caliber and general quality of the plant or fruits.

The term "fresh weight" in the context of the present invention is understood as the total weight of a freshly harvested plant; it can also be considered as the wet weight of the plant under ambient conditions (ambient temperature and atmospheric pressure). On the other hand, the term "dry weight" shall be understood as the total weight of the plant after the water content has been removed, for example, oven or stove drying.

The preparation process of the composition is made from vegetables, including berry leaves (preferably blueberry leaves). According to the invention it is done with leaves previously dried in the shade or in the sun, oven, microwave, cold or hot air, or freeze-drying. Using a temperature range between 15 - 100°C, for 0.5 to 96 hours. And grounded using blade grinding equipment, fluted discs, hammer, crushers or combinations thereof.

The process comprises the following stages:
a) Mix the dried berry leaves with water in a solid:liquid weight ratio between 1:1 and 1:50 where the water is at a temperature between 20 - 90°C;
b) stir the mixture between 50 and 800 rpm for 0.5 to 12 hours;
c) optionally incorporate preservative or preservative additives and stabilizers without stop stirring;
d) stir the mixture at between 50 and 800 rpm for up to 30 additional minutes;
e) separate the solids and remnants of dry leaves from the aqueous portion. The separation is carried out by filtration, it is possible to additionally use decantation and/or centrifugation. In the case of filtration, this can be through paper, cloth, gauze, shell-type, stainless, membrane, porcelain, plastic, steel or tangential filtration filters; and
f) adjust the concentration of total polyphenols between 4 and 12 g/L of the composition.

In a preferred embodiment of the invention, the weight ratio of dried berry leaves and water is between 1:1 and 1:20, more preferably between 1:5 and 1:10.

In a preferred embodiment of the invention, the extraction is carried out at a temperature between 20 and 80°C, preferably between 25 and 65°C, more preferably between 40 and 60°C.

In a preferred embodiment of the invention, the extraction stage lasts between 1 to 3 hours. For those skilled in the art, it will be evident that increasing the extraction time would not entail any damage to the composition obtained, and that in general terms, a lower temperature requires a longer extraction time to obtain the same extract.

The elaborated composition is enriched in antioxidants, carbohydrates, proteins, and micronutrients. The composition prepared has as major compounds flavonols, flavones, hydroxycinnamic acids, benzoic acids, and phenols.

Next, the compounds are quantified based on mg per 100 g of sample analyzed.

Among the main flavonols and flavones are:
- Quercetin 3 - 6.5mg/100g,
- Myricetin 0.5 - 13.2 mg/100g, and
- Isorhamnetin 0.7 - 1.7mg/100g.

On the other hand, among the main hydroxycinnamic acids, benzoic acids and phenols are:
- Chlorogenic acid 0.2 - 0.9mg/100g,
- Caffeic acid 0.4 - 1.4mg/100g,
- Gallic acid 20 - 44.3mg/100g,
- Feruloylquinic acid 5 - 17.5 mg/100g,
- Hydroxybenzoic acid 0.2 - 6.5mg/100g,
- Ferulic acid 0.5 - 13.3 mg/100g,
- Coumaric acid 6 - 22.2 mg/100g, and
- Resveratrol 1 - 6.5mg/100g.

Among the micronutrients and components present in a composition prepared according to the present invention (analyzed according to the TMECC methodology, 2001) are:
- Ammonium 75 - 235 mg/L,
- Sulfur 200 - 450 mg/L,
- Boron 1 - 5 mg/L,
- Calcium 250 - 780 mg/L,
- Phosphorus 25 - 90 mg/L,
- Iron 1 - 4 mg/L,
- Magnesium 120 - 380 mg/L,
- Manganese 5 - 18 mg/L,
- Nitrate 50 - 160 mg/L,
- Potassium 190 - 580 mg/L,
- Sodium 10 - 45 mg/L,
- Zinc 4 - 12 mg/L.

Considering the variability of the concentration of active ingredients in the raw material, the resulting composition is elaborated to reach a total polyphenols concentration between 4 and 12 g/L. Although it might be necessary to concentrate the composition, in general the product could exceed the indicated range, so in this case it could be diluted to the desired concentration in water and/or in an aqueous solution to be diluted that includes preservatives or preservatives and stabilizers. Optionally, a concentrated composition could be made for its use with greater antimicrobial effect. Optionally, additives can be added to the finished product composition and/or formulation, such as:
- Stabilizers, including vegetable gums, such as gellan, arabic, xanthan, locust bean, guar, tragacanth, karaya, tara gums and, in general any admissible gum according to food regulations. They allow to improve the adherence of the product, for example, in the foliar application. Their preservative or preservative action is an additional advantage of the use of gums.
- Preservatives such as sodium benzoate, potassium sorbate, calcium sorbate, sorbate salts, and organic acids such as propionic acid, lactic acid, citric acid, ascorbic acid, and acetic acid are used to improve the stability and duration of the product.

The additives are generally used in a concentration between 0.01 and 5% w/v each one.

Although biostimulants do not necessarily have to provide nutrients to crops, optionally the composition according to the present invention may include the supplementation of compounds necessary for plant growth, such as:
- Macronutrients, such as nitrogen, phosphorus, potassium, carbon.
- Secondary nutrients, such as calcium, magnesium, sulfur.
- Micronutrients, such as iron, manganese, copper, zinc, boron, molybdenum, chlorine.
- Other nutrients, such as amino acids.

The concentration of each compound, independently, is up to 50% w/v in the case of macronutrients; up to 20% w/v in the case of secondary nutrients; and, up to 10% w/v in the case of micronutrients. Analyzes were carried out to evaluate the presence of chemical residues. It was obtained that the result is negative for quantifiable residues. This means the measurement did not show values higher than the quantification limit for all the variables analyzed, including phosphorous acids, fosetyl aluminum and their salts.

On the other hand, considering that, when mixing agrochemicals with other products, they could react unfavorably due to chemical, biological and physical incompatibility, which would affect the effectiveness of the mixture. Compatibility analyzes of the invention with various agrochemical products were carried out. Experiments were carried out with copper-based agrochemicals, insecticides, and fungicides, showing that the composition of the present invention, in combination with said compounds, does not generate physicochemical changes (temperature, pH, precipitation, coloration, etc.), for which it is shown that the composition is compatible with other agrochemical products.

Thus, among the advantages of the composition of the invention and the formulations made from it, the following stand out:
- Low production cost.
- Proven efficacy (yield, quality, resistance to stress).
- Compatible with other agrochemical products.
- Residue free and organic.

The compositions according to the invention can be used in agricultural applications as biostimulant and/or antimicrobial in formats such as:
- Formulations for foliar application.
- Formulations for root application.
- Formulations for irrigation.

The application of the composition of the invention is carried out by any method available in the art, such as: sprinkling, application in furrows, in hydroponic crops, soaking of plant material, on wounds from pruning cuts, direct incorporation into soils or mixtures of sowing in greenhouse, pots, field, direct treatment of seeds, propagation material or grafts.

A composition according to the present invention can be used periodically to increase the yield, quality, rooting and/or caliber of the plant and/or fruit, and can also be used before, during or after the condition of stress occurs, to favor its recovery. In a preferred embodiment of the invention, it is used before the plant is exposed to stress conditions, since that is the moment in which it is observed plants achieve a protective effect against adverse conditions.

The composition of the invention can be used in a wide range of agricultural crops, especially vegetables and fruit trees, such as: blueberries, vines, cherry trees, apple trees, hazelnut trees, walnut trees, citrus fruits, lettuce, tomatoes, potatoes, among others.

### EXAMPLES

### OBTAINING THE COMPOSITION OF THE INVENTION

Example I: Process Conditions. Extraction experiments varying the operating conditions: temperature, solute:solvent ratio and extraction time.

Extractions were made making variations of some parameters to prepare a composition with the maximum content of total polyphenols, without sacrificing the antioxidant concentration. The temperature variations were in the range between 25 and 65°C for extractions lasting between 1 and 3 hours. The proportion of water was at a ratio between 1:5 and 1:15. The results obtained are shown in Table I.

**Table I. Results of total polyphenol concentration (TP), antioxidant concentration (AC), total sugars (TS) and suspended solids (SS) for various extraction conditions. Evaluation of 15 experiments with different combinations of process conditions: temperature, solid:liquid ratio and extraction time.**

| **Test** | **Temp. (°C)** | **Ratio** | **Time (h)** | **TP (mg/L)** | **AC (mg/L)** | **TS (g/L)** | **SS (g/L)** |
|---|---|---|---|---|---|---|---|
| **1** | 25 | 1:10 | 3 | 353±14 | 285±6 | 0.45±0.07 | 1.33±0.57 |
| **2** | 65 | 1:5 | 2 | 805±19 | 191±5 | 1.31±0.04 | 6.66±1.15 |
| **3** | 45 | 1:10 | 2 | 494±31 | 308±6 | 0.76±0.05 | 2.66±1.15 |
| **4** | 65 | 1:10 | 3 | 758±35 | 192±16 | 0.84±0.02 | 6±0 |
| **5** | 25 | 1:10 | 1 | 302±49 | 311±1 | 0.39±0.05 | 1.66±0.57 |
| **6** | 45 | 1:15 | 1 | 343±14 | 304±7 | 0.41±0.01 | 1.33±0.57 |
| **7** | 65 | 1:10 | 1 | 630±49 | 246±16 | 0.67±0.02 | 4±0 |
| **8** | 45 | 1:15 | 3 | 391±30 | 311±10 | 0.4±0.05 | 2±0 |
| **9** | 25 | 1:5 | 2 | 349±99 | 301±26 | 0.68±0.08 | 2.33±1.52 |
| **10** | 45 | 1:10 | 2 | 514±18 | 307±11 | 0.76±0.09 | 2.66±1.15 |
| **11** | 45 | 1:5 | 1 | 482±4 | 303±5 | 1.15±0.09 | 6±0 |
| **12** | 45 | 1:5 | 3 | 558±17 | 293±16 | 1.24±0.09 | 6±0 |
| **13** | 25 | 1:15 | 2 | 256±8 | 301±11 | 0.3±0.02 | 1.66±0.57 |
| **14** | 45 | 1:10 | 2 | 485±32 | 308±15 | 0.64±0.05 | 2.66±1.15 |
| **15** | 65 | 1:15 | 2 | 626±23 | 206±14 | 0.59±0.03 | 2.66±1.15 |

Example II: Composition. Total content of polyphenols, flavonols and anthocyanins, in addition to a polyphenolic profile of 2 types of samples.

Samples of early and late harvest leaves were analyzed. Since the methods used for quantification were spectrophotometric assay of sulfuric phenol and HPLC with DAD detector, it was necessary to previously extract the composition of the invention into a solution of water, methanol, and formic acid for the analyses.

**Table II1. Content of total polyphenols (TP), total flavonols (TF) and total anthocyanins (TA) in early and late samples. Early Composition: composition of the invention from leaves harvested early; Late Composition: composition of the invention from leaves harvested late.**

| **Sample** | **TP (gallic acid mg /100g sample)** | **SD** | **TF (quercetin mg /100g sample)** | **SD** | **TA (cyanidin A3A glucoside mg /100g sample)** | **SD** |
|---|---|---|---|---|---|---|
| Early Composition | 431 | 29.1 | 41 | 1.3 | 1.00 | 0.002 |
| Late Composition | 474 | 7.5 | 50 | 6.2 | 0.33 | 0.005 |

**Table II2. Polyphenolic profile in Early Composition and Late Composition. Early Composition: composition of the invention from leaves harvested early; Late Composition: composition of the invention from leaves harvested late.**

| **Anthocyanins** | **Early Composition (mg/100g sample)** | | **Late composition (mg/100g sample)** | |
|---|---|---|---|---|
| | Average | SD | Average | SD |
| **Anthocyanins** | | | | |
| Dolphinidin | 0,0025 | 0,0000 | 0,0025 | 0,0000 |
| Malvidina | 0,0025 | 0,0000 | 0,0025 | 0,0000 |
| Cyanidin | 0,0025 | 0,0000 | 0,0025 | 0,0000 |
| Petunidine | 0,0025 | 0,0000 | 0,0025 | 0,0000 |
| Peonidine | 0,0025 | 0,0000 | 0,0025 | 0,0000 |

| **Flavonols and flavones** | | | | |
|---|---|---|---|---|
| Quercetin | 3,2800 | 0,0087 | 3,265 | 0,0024 |
| Myricetin | 0,5850 | 0,0850 | 6,7200 | 0,0052 |
| Isorhamnetin | 0,7775 | 0,0048 | 0,8025 | 0,0015 |
| Apigenin | 0,1375 | 0,0037 | 0,1475 | 0,0009 |

| **Hydroxycinnamic acids and benzoic acids and others** | | | | |
|---|---|---|---|---|
| Chlorogenic acid | 0,2225 | 0,0023 | 0,4075 | 0,0045 |
| Caffeic acid | 0,4000 | 0,0046 | 0,6625 | 0,0044 |
| Gallic acid | 20,9450 | 0,0038 | 22,6775 | 0,0028 |
| Feruloylquinic acid | 8,9650 | 0,0034 | 5,2225 | 0,0650 |
| Hydroxybenzoic acid | 0,2000 | 0,0068 | 3,2650 | 0,0023 |
| Ferulic acid | 0,5850 | 0,0074 | 6,7200 | 0,0031 |
| Coumaric Acid | 11,3275 | 0,0170 | 6,4050 | 0,0530 |
| Resveratrol | 3,2800 | 0,0160 | 0,9400 | 0,0064 |

For comparison, the results of total polyphenols of samples that were not extracted in water, methanol, and formic acid solution prior to this quantification (TableII3). This allows to estimate the losses produced by the extraction during the analytical extraction step (Table II3).

**Table II3. Total polyphenols (TP) in sample without analytical extraction.**

| **Sample** | **TP (mg gallic acid /100g sample)** | **SD** |
|---|---|---|
| Late Composition | 633 | 77.7 |

It can be seen that (by the same mechanism) without previous analytical extraction the concentration of total polyphenols is 33.5% higher than the one regularly estimated by the analytical method used to determine the content of total polyphenols (TP), total flavonols (TF) and total anthocyanins (TS) and their polyphenolic profile.

Example III: Preparation of a composition with berry leaves.

A composition batch was made using 500 g of berry leaves; 80% of them were blueberry leaves dried in the shade for 72 hours.

Once the leaves dried, they were mixed with water in a 1:15 weight ratio, with 7.5 L of water at a temperature of 50°C, adding 0.1% w/v of ascorbic acid and 0.25% w/v of potassium sorbate.

The mixture was kept at 50°C under stirring at 250 rpm for 3.5 hours. Then 0.2% w/v citric acid and 0.05% w/v xanthan gum were added, maintaining under stirring at 200 - 250 rpm for 30 additional minutes, without heating.

Once the mixing time ended, the solids were separated using a paper filter, recovering the aqueous fraction, and measuring its total polyphenols concentration.

7.86 g/L of total polyphenols were obtained in the composition. For its direct application in crops, it was diluted, by adding an aqueous solution containing the same additives added during extraction, to a concentration of 4.75 g/L of total polyphenols in the composition.

Example IV: Preparation of a composition with blueberry leaves (100%).

A batch of composition was made using 500 g of shade-dried for 72 hours blueberry leaves.

The dried leaves were mixed with water in a 1:5 ratio by weight, with 2.5 L of water at 65°C.

The mixture was kept at 65°C under stirring at 200 rpm for 4 hours. Stirring was then maintained at 200 rpm for 20 minutes, room temperature. Solids were removed using a shell-type filter, separating the aqueous fraction. The concentration of total polyphenols was measured, obtaining 8.41 g/L. The composition was diluted with water to a concentration of 6 g/L of total polyphenols.

Example V: Composition. Quantification of the compounds of the composition of the invention. Measurements of the composition of a liquid formulation for using it as foliar biostimulant according to the present invention were made. The results obtained are shown in Table V.

**Table V. Analysis of a composition of the invention for using it as a biostimulant.**

| **Compound** | **%** | **mg/L** |
|---|---|---|
| Antioxidant Concentration | 1-4 | 10.000-40.000 |
| Total Polyphenols | 0,2-1,2 | 2.000-12.000 |
| Organic Material | 0,01-0,06 | 100-600 |
| Organic Carbon | 0,01-0,03 | 100-300 |
| | | |

| **Elements** | **%** | **mg /L** |
|---|---|---|
| Total Nitrogen (N) | 0,01-0,06 | 100-600 |
| Available Nitrate (NO3) | 0,005-0,02 | 50-200 |
| Available Ammonium (NH4) | 0-0,03 | 0-300 |
| Potassium (K2O) | 0-0,08 | 0-800 |
| Phosphorus (P2O5) | 0-0,02 | 0-150 |
| Magnesium (MgO) | 0-0,05 | 0-500 |
| Calcium (CaO) | 0-0,10 | 0-1.000 |
| Sulfur (S) | 0-0,06 | 0-600 |
| | | |

| **Microelements** | **%** | **mg/L** |
|---|---|---|
| Iron (Fe) | 0-0,01 | 0-100 |
| Manganese (Mn) | 0-0,01 | 0-100 |
| Zinc (Zn) | 0-0,01 | 0-100 |
| | | |

| **Heavy Metals** | **%** | **mg/L** |
|---|---|---|
| Arsenic (As) | 0 | <0.01 |
| Cadmium (Cd) | 0 | <0.01 |
| Mercury (Hg) | 0 | <0.01 |
| Lead (Pb) | 0 | <0.01 |

### RESULTS OF APPLICATION OF THE BIOSTIMULANT COMPOSITION

Example 1: Yield and quality. Field experiments on lettuce.

A first experiment (Experiment 1A) was carried out to evaluate the effect of the foliar application of the present invention on the yield of hydroponic lettuce type Lollo bionda cv. *Dabi* measured as fresh weight, dry weight, and chlorophyll levels. The plants were subjected to abiotic stress (poor growth), and various treatments were applied (T).

To carry out this objective, a hydroponic lettuce orchard was selected, which presented specimens with poor growth and early death because of fertilization problems, generating abiotic stress. The stimulus consisted in the fact that the nutrient solution had a pH of 3.8 (ideal pH 6.0) and high electrical conductivity (3,000 µS/cm), the ideal being 250 to 750 µS/cm. The culture system used was hydroponics in NTF.

The experiment was carried out using 7 treatments (25 lettuces each). A summary of Experiment 1A is shown in Table 1A.

**Table 1A. Summary of treatments applied in Experiment 1A.**

| **Treatment** | **Product** | **Dose (L/ha)** | **Application time** |
|---|---|---|---|
| **T0** | Control Treatment | - | - |
| **T1** | Biostimulant Macrocystis pyrifera 1 | 3 | 10 days post-transplant |
| **T2** | Biostimulant Macrocystis pyrifera 1 | 1.5 | + 7 days |
| **T3** | Biostimulant Macrocystis pyrifera 2 | 3 | + 7 days |
| **T4** | Biostimulant Macrocystis pyrifera 2 | 1.5 | + 7 days |
| **T5** | Invention Composition 1 | 3 | + 7 days. |
| **T6** | Invention Composition 1 | 1.5 | + 7 days |

**Table 1B. Quality variables of lettuce from Experiment 1A. Different letters indicate significant differences (p value < 0.05).**

| **Treatment** | **Fresh weight (g)** | **Dry weight (%)** | **A¹** | **Chlorophyll (µmol/m²)** |
|---|---|---|---|---|
| **T0** | 80.2 a | 11.6a | -19.8 a | 148.4 a |
| **T1** | 104.5 b | 14.3 a | -18.6 b | 215.2 b |
| **T2** | 113.5 b | 13.4 a | -18.5 b | 194.5 b |
| **T3** | 101.9 b | 16.3 b | -18.7 b | 201.3 b |
| **T4** | 100.8 b | 14.1 a | -17.9 b | 188.3 b |
| **T5** | 112.3 b | 18.5 b | -19.2 a | 193.5 b |
| **T6** | 110.3 b | 17.0 b | -19.5 a | 174.0 b |
| **p value** | 0.0004 | 0.0043 | 0.0025 | 0.0013 |

| | | | | |
|---|---|---|---|---|
| ¹ CieLAB scale index A: negative values indicate greater intensity of green. | | | | |

When evaluating different quality variables of the lettuces of Experiment 1A, in Figure 1A it was observed that the treatments T1 to T6 significantly increased complete weight of the plant (aerial part + root). However, in Figure 1B it was observed that only treatments T3, T5 and T6 (commercial solution based on *Macrocystis pyrifera* 2 and composition of the present invention 1 and 2, respectively) were able to significantly increase the percentage of dry matter in lettuce with abiotic stress. In terms of color, treatments T2 to T4 significantly decreased the intensity of green color, compared to T0, being T5 and T6 comparable to the control. Finally, treatments T1 to T6 were able to significantly increase the chlorophyll content.

From the above data, it is found that treatments T5 and T6 (composition of the present invention) presented a fresh weight between 37.5 and 40% higher compared to treatment T0 (control, without application) and a dry weight between 46.6 and 59.5% higher compared to treatment T0. Finally, treatments T5 and T6 presented an increase of 30 and 17%, respectively, in the levels of chlorophyll in the plant compared to treatment T0. These results were statistically different.

A second experiment was carried out on lettuce (Experiment 1B) using similar conditions but fixing the dose to 3L/ha for all treatments and incorporating a commercial control based on *Ascophyllum nodosum.* A summary of Experiment 1B is shown in Table 1C.

**Table 1C. Summary of treatments applied in Experiment 1B.**

| **Treatment** | **Product** | **Dose (L/ha)** | **Application time** |
|---|---|---|---|
| **T0** | Control Treatment | | - - |
| **T1** | Biostimulant *Macrocystis pyrifera* 1 | 3.0 | 10days post-transplant + 7 days + 7 days + 7 days + 7 days. |
| **T2** | Biostimulant *Macrocystis pyrifera* 2 | | |
| **T3** | Biostimulant *Macrocystis pyrfera* 3 | | |
| **T4** | Commercial Control (*Ascophyllum nodosum*) | | |
| **T5** | Invention Composition 1 | | |
| **T6** | Invention Composition 2 | | |

**Table 1D. Lettuce quality variables in Experiment 1B. Different letters indicate significant differences (p value < 0.05).**

| **Treatment** | **Fresh weight (g)** | **Dry weight (%)** | **A¹** | **Chlorophyll (µmol/m²)** | **Application time** |
|---|---|---|---|---|---|
| **T0** | 113.2 a | 9.8 a | -16.5 | 283.4 | 9.8 a |
| **T1** | 125.0 a | 9.4 a | -16.2 | 321.2 | 9.4 a |
| **T2** | 148.7 b | 9.7 a | -16.4 | 308.3 | 9.7 a |
| **T3** | 168.6 c | 10.4 a | -15.5 | 335.2 | 10.4 a |
| **T4** | 145.3 b | 12.9 b | -15.6 | 291.4 | 12.9 b |
| **T5** | 180.7 c | 11.9 b | -12.1 | 311.2 | 11.9 b |
| **T6** | 156.9 b | 13.1 b | -15.7 | 306.4 | 13.1 b |
| **p value** | <0.0001 | 0.0053 | 0.230 | 0.762 | 0.0053 |

| | | | | | |
|---|---|---|---|---|---|
| ¹ CieLAB scale index A: negative values indicate greater intensity of green. | | | | | |

It was observed that treatments T5 and T6 (composition of the present invention) presented a fresh weight between 38.6 and 59.6% higher compared to treatment T0 (control, without application), and the commercial control T4 showed an increase of only 28.4%. In addition, T5 and T6 presented a dry weight between 21.4 and 33.7% higher compared to the T0 treatment. These results were statistically different.

Example 2: Yield and caliber. Field experiments in blueberries.

This experiment (Experiment 2) evaluated the effect of foliar application of the composition of the present invention on the yield and size of the fruits corresponding to blueberries cv. *Duke,* which had a completely randomized design composed of 2 treatments with 8 repetitions of 5 plants each. A summary of Experiment 3 is shown in Table 2A.

**Table 2A. Summary of treatments applied in Experiment 2.**

| **Treatment** | **Product** | **Dose (L/ha)** | **Wetting (L/ha)** | **Number of applications** | **Application time** | **Date of application** |
|---|---|---|---|---|---|---|
| **T0** | Control Treatment | - | - | - | - | - |
| **T1** | Invention Composition | 3 | 400 | 3 | Mature fruit | 30 Dec 2018 |
| | | | | | | 19 Jan 2019 |
| | | | | | | 9 Feb 2019 |

At the time of harvest, all the fruit from treated plants were weighed, estimating the total yield expressed in kg/ha for each harvest. After harvest, the size of 10 fruits per plant taken randomly was determined, using a metal gauge used in the industry. With these measurements, the average fruit diameter per sampled plant was obtained. A summary of the results obtained are shown in Tables 2B, 2C and 2D.

**Table 2B. Total yield of different treatments of Experiment 2.**

| **Treatment** | **Yield (kg** / **ha)** | |
|---|---|---|
| | Average | S.E. |
| **T0** | 6,741.9 | 1,539.1 |
| **T1** | 7,903.1 | 1,384.1 |

**Table 2C. Yields for each harvest for the different treatments of Experiment 2 (* indicates significant differences).**

| **Treatment** | **Yield (kg / ha)** | | | | | | | | | |
|---|---|---|---|---|---|---|---|---|---|---|
| | Harvest 1 12 Jan 2019 | | Harvest 2 19 Jan 2019 | | Harvest 3 26 Jan 2019 | | Harvest 4 2 Feb 2019 | | Harvest 5 11 Feb 2019 | |
| | Average | S.E. | Average | S.E. | Average | S.E. | Averag e | S.E. | Average | S.E. |
| **T0** | 3,232.6 | 521.5 | 1,890.4 | 685.6 | 992.4 * | 219.6 | 513.9 | 125.7 | 112.7 | 44.4 |
| **T1** | 3,830.5 | 413.1 | 2,657.3* | 579.6 | 884.8 | 253.8 | 434.0 | 131.8 | 96.5 | 31.6 |

**Table 2D. Mean of equatorial diameter for each flourish and different treatments used in Experiment 2 (* indicates significant differences).**

| **Treatment** | **Caliber (mm)** | | | | | | | |
|---|---|---|---|---|---|---|---|---|
| | Harvest 1 12 Jan 2019 | | Harvest 2 19 Jan 2019 | | Harvest 3 26 Jan 2019 | | Harvest 4 2 Feb 2019 | |
| | Average | S.E. | Average | S.E. | Average | S.E. | Average | S.E. |
| **T0** | 13.09 | 0.18 | 11.61 | 0.5 | 12.27 | 0.19 | 11.37 | 0.19 |
| **T1** | 13.20 | 0.23 | 12.74* | 0.14 | 12.48 | 0.29 | 11.75 | 0.22 |

Figure 2A shows quantification of crop yield of the different treatments in kg/ha. Figure 2B shows the harvest distribution as a percentage of the total, for each of the first 4 harvests. From these figures it is observed that the use of the composition of the invention (T1) increased the yield by 17%, promoting the harvest concentration.

Figure 2C shows the effect of treatment on the size of the fruits, where T1 increased the size by 10% with respect to T0, generating a change in the category of the fruit: from medium size to large size (understanding that the small caliber is equivalent to 6 to 8 mm, medium from 8 to 11 mm and large greater than 12 mm).

Example 3: Caliber. Field experiment on apples.

An experiment (Experiment 3) was carried out to evaluate the effect of foliar application of the composition of the present invention on the caliber of apple cv. *Cripps Pink* subjected to abiotic stress (poor growth), which had a completely randomized design composed of 3 treatments with 10 repetitions of 1 plant each. The experiment was carried out in a productive field in Pelarco, Maule Region, Chile. A summary of Experiment 3 is shown in Table 3A.

**Table 3A. Summary of treatments applied in Experiment 3.**

| **Treatment** | **Product** | **Dose (L/ha)** | **Wetting (L/ha)** | **Number of applications** | **Application time** | **Date of application** |
|---|---|---|---|---|---|---|
| **T0** | Control Treatment | - | - | - | - | - |
| **T1** | Invention Composition 1 | 3 | 1,500 | 4 | Color shift | 22 Feb 19 |
| | | | | | | 8 Marl 9 |
| | | | | | | 22 Mar 19 |
| | | | | | | 5 Apr 19 |
| **T2** | Invention Composition 1 | 3 | 1,500 | 8 | Color shift | 22 Feb 19 |
| | | | | | | 1 Mar 19 |
| | | | | | | 8 Mar 19 |
| | | | | | | 15 Mar 19 |
| | | | | | | 22 Mar 19 |
| | | | | | | 29 Mar 19 |
| | | | | | | 5 Mar 19 |
| | | | | | | 12 Apr 19 |

A summary of the results obtained is shown in Table 3B.

**Table 3B. Average fruit weight for the different treatments of Experiment 3. Different letters indicate significant differences (p value < 0.05).**

| **Treatment** | **Average fruit weight (g)** | **S.E.** |
|---|---|---|
| **T0** | 131.9 a | 2.9 |
| **T1** | 148.3 b | 2.0 |
| **T2** | 155.6 b | 2.9 |
| **p value** | <0.0001 | |

Figure 3 compares the effect of number of applications of the composition of the invention. An increase of 12% in size (average fruit weight) was observed in the case of 4 applications (T1) and 18% in the case of 8 applications (T2) compared to the control without application (T0).

Additionally, it was observed that the fruits treated with the composition of the invention presented less damage due to insolation or excess sun, which is observed in a lower incidence of yellow spots on the skin of the fruits (results not shown). This represents an improvement in the quality of the fruit.

Example 4: Heat stress. Evaluation of the effect of the application of the composition of the invention on productivity and quality of lettuce against heat stress.

To evaluate the effect of foliar application of the composition of the invention on productivity and quality in lettuce (*Lactuca sativa)* against heat stress, an experiment (Experiment 4) was carried out at Agrícola Hidrogourmet, located in San Fernando, O'Higgins Region, Chile. The experiment consisted of 3 treatments of 20 plants each, of which the 5 central plants were evaluated. There was an NTF system, where the plants were periodically watered with a basal fertilizer solution. Plants were treated with a single application 1 day prior to heat stress, with exposure to 50°C for 4 hours, 3 weeks before harvest. Control Treatment without application (T0) was used as absolute control. A commercial composition based on *Ascophyllum nodosum* (T1) was used as positive control, and finally the composition of the invention (T2). A summary of the conditions of Experiment 4 is shown in Table 4A and a summary of the results obtained is shown in Table 4B.

**Table 4A. Summary of treatments applied in Experiment 9.**

| **Treatment** | **Description** | **Dose** | **Application time** | **Date of application** |
|---|---|---|---|---|
| **T0** | 4 hours of heat | 50°C | - | - |
| **T1** | *Ascophyllum nodosum* + 4 hours of heat | 3.0 Uha + 50°C | 1 day before stress | 21 Jun 2019 |
| **T2** | Invention Composition + 4 hours of heat | 3.0 L/ha + 50°C | 1 day before stress | 21 Jun 2019 |

**Table 4B. Lettuce quality variables in Experiment 4. Different letters indicate significant differences (p value < 0.05).**

| **Treatment** | **Fresh weight (g)** | **Dry weight (%)** | **Dry matter (%)** | **Leaf dehydration recovery week 1 (%)** | **Leaf dehydration recovery week 2 (%)** |
|---|---|---|---|---|---|
| **T0** | 108.5 a | 19.5 a | 18.0 a | 0 a | 54 a |
| **T1** | 112.4 a | 19.5 a | 17.3 a | 18 b | 66 b |
| **T2** | 118.4 a | 21.5 b | 18.1 a | 24 c | 68 b |

From Figures 4A and 4B it is concluded that the application of the composition of the invention (T2) has a better effect than the use of a commercial composition based on *Ascophyllum nodosum* (T1) in terms of increasing the fresh and dry weight of the treated lettuce. Only treatment T2 showed a significant increase compared to the control without application (T0) in terms of dry weight (Figure 4B).

From Figure 4C it is concluded that the application of the composition of the invention (T2) allows a significantly faster recovery compared to the use of a commercial composition based on *Ascophyllum nodosum* (T1), showing a 33% greater recovery from dehydration, 1 week after heat stress.

Example 5: Cold stress. Evaluation of the effect of the application of the composition of the invention on productivity and quality of lettuce against cold stress.

To evaluate the effect of foliar application of the composition of the invention on productivity and quality in lettuce (*Lactuca sativa*) against cold stress, an experiment (Experiment 5) was carried out at Agrícola Hidrogourmet, located San Fernando, O'Higgins Region, Chile. The experiment consisted of 3 treatments on 20 plants each one, of which the 5 central plants were evaluated. There was an NTF system, where the plants were periodically watered with a basal fertilizer solution. Plants were treated with a single application 1 day prior to cold stress, with exposure to -3°C for 4 hours, 1 week before harvest. Control Treatment without application (T0) was used as absolute control, a commercial composition based on *Ascophyllum nodosum* (T1) was used as positive control and finally the composition of the invention (T2). A summary of Experiment 5 is shown in Table 5A, and the results obtained are shown in Tables 5B and 5C.

**Table 5A. Summary of treatments applied in Experiment 5. Different letters indicate significant differences (p value < 0.05).**

| **Treatment** | **Description** | **Dose** | **Application time** | **Date of application** |
|---|---|---|---|---|
| **T0** | 4 hours of cold | -3°C | - | - |
| **T1** | *Ascophyllum nodosum* + 4 hours of cold | 3.0 L/ha + -3°C | 1 day before stress | 7 May 2019 |
| **T2** | Invention Composition + 4 hours of cold | 3.0 L/ha + -3°C | 1 day before stress | 7 May 2019 |

**Table 5B. Yield measurements and percentage of lettuce in marketable state of Experiment 5. Different letters indicate significant differences (p value < 0.05).**

| **Treatment** | **Yield (units/ha)** | **Marketable yield (%)** |
|---|---|---|
| **T0** | 23,040 a | 16 a |
| **T1** | 50,400 b | 35 b |
| **T2** | 57,600 b | 40 b |

It is concluded that the application of the composition of the invention (T2) generates 14% higher effects in terms of enhancing the yield of marketable lettuce than the use of *Ascophyllum nodosum* (T1) using the same commercial dose. T1 and T2 showed superior results to the control without application (T0) and the composition of the invention (T2) generates a 150% higher yield of marketable units per hectare compared to T0. This difference is statistically significant.

**Table 5C. Lettuce quality variables in Experiment 5. Different letters indicate significant differences (p value < 0.05).**

| **Treatment** | **Fresh weight (g)** | **Fresh weight vs T0 (%)** | **Dry weight (g)** | **Chlorophyll (nmol/mg dry weight)** |
|---|---|---|---|---|
| **T0** | 77.3 a | 0 a | 10.3 a | 1.86 a |
| **T1** | 97.5 b | 26.2 b | 22.4 b | 1.64 a |
| **T2** | 115.7 b | 49.7 c | 22.9 b | 3.79 b |

From Figures 5A, 5B and 5C it is concluded that the application of the composition of the invention (T2) generates superior effects than *Ascophyllum nodosum* (T1) in terms of fresh and dry weight of the treated lettuce. Both treatments show a significant increase compared to the control without application (T0) and the composition of the invention (T2) shows an increase of 49.7 and 22.3% higher in fresh weight and dry weight, compared to T0, respectively.

From Figure 5D it is concluded that the application of the composition of the invention (T2) generates a chlorophyll concentration (nmol/mg dry weight) more than 130% higher than the concentration when using *Ascophyllum nodosum* (T1). Only treatment T2 is statistical different compared to the control without application (T0).

Example 6: Comparison of compositions. Comparison of the composition of the invention with other natural and synthetic compositions.

An experiment was carried out to evaluate the effect of the foliar application of the present invention on the yield in fresh weight, dry weight, and chlorophyll levels in hydroponic lettuce type Lollo bionda cv. *Dabi,* compared to other natural and synthetic compositions (Experiment 6). The experiment was conducted at Agrícola Hidrogourmet, located in San Fernando, O'Higgins Region, Chile.

The experiment evaluated 6 treatments of 5 plants each, in an NTF system. The aim of these 6 treatments was to compare the composition of the invention with other compositions from different nature or produced by different processes, but with the same level of total polyphenols (5g/L). The treatments are detailed below:
- T0 Negative control: No application.
- T1 Invention Composition: Composition of the invention.
- T2 Composition 1: Composition based on the same raw material of the composition of the invention, made by a process based on patent CN103211852A, in which the use of organic phase was omitted so the extract was also aqueous (variable: process).
- Synthetic T3: Synthetic extract based on gallic acid and water (variable: synthetic source of polyphenols).
- T4 Biortig: Nettle-based commercial biostimulant (variable: commercial competitor based on plant extract, not algae-based).
- T5 Composition 2: Strawberry leaf extract (100%), made with the same process of the invention (variable: vegetable source).

A summary of the conditions of Experiment 6 is shown in Table 6A.

**Table 6A. Summary of treatments applied in Experiment 6.**

| **Treatment** | **Description** | **Dose (L** / **ha)** | **Application moment** |
|---|---|---|---|
| **T0** | Control Treatment | | |
| **T1** | Invention Composition | 3.0 | 3 weeks post-transplant + 7 days + 7 days + 7 days + 7 days + 7 days. |
| **T2** | Composition 1 | | |
| **T3** | Synthetic | | |
| **T4** | Biortig | | |
| **T5** | Composition 2 | | |

A summary of the results obtained in Experiment 6 is shown in Table 6B.

**Table 6B. Summary of the results of Experiment 6.**

| **Treatment** | **Fresh weight (g)** | **Dry weight** (%) | **Chlorophyll (nmol/mg dry weight)** |
|---|---|---|---|
| **T0** | 146.2 a | 5.9 a | 12.1 a |
| **T1** | 220.5 b | 8.2 b | 39.7 b |
| **T2** | 219.0 b | 5.3 a | 22.0 a |
| **T3** | 213.3 b | 5.8 a | 17.3 a |
| **T4** | 249.0 b | 6.2 a | 17.7 a |
| **T5** | 217.7 b | 6.4 a | 17.7 a |

When evaluating different quality variables of the lettuce, it was observed (Figure 6A) that treatments T1 to T5 significantly increased the complete weight of the plant (aerial part + root). However, in Figure 6B it was observed that only treatment T1 (composition of the present invention) was able to significantly increase the percentage of dry matter in lettuce. This significant gain in dry matter was 39% higher respect to control (T0). In terms of chlorophyll content, it was observed from Figure 6C that only the T1 treatment was able to significantly increase the chlorophyll concentration in the treated lettuces. This normalized dry weight increase was 212% compared to T0. It is inferred that the treatment used could positively affect photosynthesis and formation of photoassimilates, increasing their dry matter percentage. Additionally, it was observed that leaves treated with T1 showed a lower level of oxidation than T0, extending their post-harvest life (results not shown). The significant increase in dry matter and chlorophyll in the T1 lettuces compared to all the other treatments allows us to conclude that both, the nature of the raw material and the process used in the composition of the invention, are significant elements. Those together generate a surprisingly better biostimulant effect than when using other plant sources, other types of polyphenols or other extraction processes, based on the same inputs.

Finally, from the samples of Experiment 6, quantification of postharvest dehydration was carried out to evaluate the effect of the use of the composition of the invention on the dehydration of lettuce once harvested and stored in cold storage. For this, 3 representative leaves of each of the treatments T0 and T1 were refrigerated for 21 days at 5°C, and the weight loss of each one was quantified. A summary of the conditions and results of the quantification of postharvest dehydration is presented in Table 6C.

**Table 6C. Conditions and results of postharvest dehydration quantification.**

| **Treatment** | **Days at 5°C** | **Harvest weight (g)** | **Weight after cold (g)** | **Percentage of dehydration (%)** |
|---|---|---|---|---|
| **T0** | 21 | 77 | 61 | 20.0 |
| **T1** | 21 | 89 | 88 | 1.1 |

T0 presented 20% dehydration on day 21. In contrast, T1 presented only 1.1% dehydration, verifying that the use of the composition of the invention has a delayed effect on plant senescence. Photographs of the samples on day 21 at 5°C, corresponding to T0 and T1, are shown in Figures 6D and 6E, respectively.

Example 7: Antimicrobial effect. Growth inhibitory effect of the composition of the invention against *Bacillus* sp, *Enterobacter aerogenes, Salmonella* sp, *Staphylococcus aureus* and *Escherichia coli.*

Routine experiments were performed comparing the inhibition halos, using an antibiotic as a positive control: carbamycin 0.1 g/L for *Bacillus* sp; chloramphenicol 0.1 g/L for *Enterobacter aerogenes;* and, ampicillin 0.1 g/L. for *Salmonella* sp, *Staphylococcus aureus* and *Escherichia coli* as shown in Table 7 below.

**Table 7. Results of the halos of inhibition for each of the microorganisms in comparison with the antibiotic control.**

| **Microorganism** | **Inhibition halo (mm)** | |
|---|---|---|
| | Invention Composition | Positive Control (antibiotic) |
| *Bacillus sp* | 26 | 31 |
| *Enterobacter aerogenes* | 12 | 50 |
| *Salmonella sp* | 5 | 28 |
| *Staphylococcus aureus* | 4 | 25 |
| *Escherichia coli* | 23 | 52 |

An example of the inhibition halos is shown in Figures 7A and 7B: inhibition halo of the invention and inhibition halo of ampicillin (antibiotic as positive control) in *Escherichia coli,* respectively. Although the experiments showed the inhibitory effect of the composition of the invention in all the microorganisms evaluated, the representative image of the effect was selected because the inhibition halos were clearly seen in both plates (*Escherichia coli*)*.*

Example 8: Plant quality. Field experiment on tomato plants.

An experiment (Experiment 8) was carried out to evaluate the effect of foliar application of the composition of the present invention on the quality of tomato plants cv. *Cal Ace.* It had a design composed of 4 treatments with 3 repetitions of 1 plant each. The experiment was carried out at the Quillaja Experimental Center, of the Fitonova company, in Talca, Maule Region. A summary of Experiment 8 is shown in Table 8A.

**Table 8A. Summary of treatments applied in Experiment 8.**

| **Treatment** | **Product** | **Invention composition dilution (ml/L)** | **Application Moment** |
|---|---|---|---|
| **T0** | Absolute Control | - | - |
| **T1** | Invention Composition | 2 | Transplant + 15 days. |
| **T2** | Invention Composition + Bio-3 at 25% | 2 | Transplant + 15 days. |
| **T3** | Invention Composition + Bio-3 at 50% | 2 | Transplant + 15 days. |
| **T4** | Invention Composition + Bio-3 at 100% | 2 | Transplant + 15 days. |

Bio-3 is a commercial coating based on hydrocolloids product from Venavi Company. A summary of the results obtained in Experiment 8 is shown in Table 8B.

**Table 8B. Quality variables of tomato plants in Experiment 8.**

| **Treatment** | **Plant height¹ (cm)** | **Stem diameter (cm)** | **Number of leaves²** | **Fresh weight of the aerial part³ (g)** | **Fresh weight of the root³ (g)** | **Root length (cm)** |
|---|---|---|---|---|---|---|
| **T0** | 10.72 | 0.18 | 6.23 | 1.62 | 0.16 | 12.24 |
| **T1** | 16.35 | 0.23 | 9.16 | 2.47 | 0.31 | 17.03 |
| **T2** | 17.98 | 0.26 | 9.56 | 2.74 | 0.34 | 18.53 |
| **T3** | 18.32 | 0.28 | 9.65 | 2.82 | 0.38 | 18.86 |
| **T4** | 21.12 | 0.36 | 12.23 | 3.21 | 0.43 | 19.32 |

| | | | | | | |
|---|---|---|---|---|---|---|
| ¹ Measure from the base of the stem below the first internode to the top of the branches. ² Number of true leaves of each plant. ³ Each plant was divided into aerial part (stem and leaves) and root. | | | | | | |

Figure 8A shows the effect of different treatments on plant height and stem diameter. Regarding the height of the plant, the use of the composition of the invention increased this parameter between 47 and 96%, showing a complementary effect with the use of Bio-3 at 100%, and the use of Bio-3 being indifferent at 25% and 50%. Regarding the diameter of the stem of the plant, the use of the composition of the invention increased this parameter between 28 and 100%, showing a synergistic effect with the use of Bio-3, because at higher concentration the greater stem diameter.

Figure 8B compares the effect of the different treatments on fresh weight of the aerial part of the plant and the weight of its root. Regarding the fresh weight of the aerial part, the use of the composition of the invention increased this parameter between 52 and 98%. Regarding the weight of the root, a similar effect was observed, increasing its weight between 94 and 169%. In both parameters, a synergistic effect is observed with the use of Bio-3.

Figure 8C compares the effect of the different treatments on the number of leaves and the length of the root of the plant. Regarding the number of leaves, the use of the composition of the invention increased this parameter between 53 and 97%, showing a synergistic effect with the use of Bio-3. Regarding the length of the root, a similar effect was observed, increasing its length between 39% and 58%. However, the concentration of use of Bio-3 does not have a relevant effect.

Example 9: Rooting. Evaluation of the effect of the application of the composition of the invention on the rooting of blueberry plants in maternity.

The level of rooting (% of exploration) was measured in order to evaluate the effect of foliar application of the composition of the invention on the growth of blueberry var. *Emerald* with 3 months from planting. 3 trays of 200 cavities per treatment (10cc format) were applied, 600 plants in total per treatment.

**Table 9A. Summary of treatments applied in Experiment 9.**

| **Treatment** | **Product** | **Dose** | **Application Moment** |
|---|---|---|---|
| **T0** | Negative Control | - | - |
| **T1** | Invention Composition | 300cc/100L | 3 months after plantation |
| **T2** | Invention Composition | 300cc/100L | 3 months after plantation + 15 days. |
| **T3** | Invention Composition | 300cc/100L | 3 months after plantation + 15 days + 15 days. |

**Table 9B. Rooting level obtained in Experiment 9.**

| **Treatment** | **Average Root¹ (%)** |
|---|---|
| **T0** | 65% |
| **T1** | 75% |
| **T2** | 90% |
| **T3** | 87% |

| | |
|---|---|
| ¹ Measurement of 15 random plants per treatment. | |

From the results, it was observed that the percentage of root exploration increased with the application of the composition of the invention. The highest average was obtained by T2, corresponding to 2 applications of the product separated every 15 days, having an increase of 25% of exploration compared to the control. There were no statistically significant differences between treatments.

Example 10: Rooting. Evaluation of the effect of the application of the composition of the invention on the rooting of cherry plants in maternity.

To evaluate the effect of applying the composition of the invention on the growth of G6 cherry plants after 10 days of transplantation, their rooting level (% exploration) was evaluated. 3 trays of 72 cavities per treatment (60cc format) were applied, 216 plants in total per treatment.

**Table 10A. Summary of treatments applied in Experiment 10.**

| **Treatment** | **Product** | **Dose** | **Type of application** | **Application Moment** |
|---|---|---|---|---|
| **T0** | Negative Control | - | - | - |
| **T1** | Invention Composition | 300cc/100L | Foliar | 10 days post-transplant + 15 days. |
| **T2** | Invention Composition | 300cc/100L | Foliar | 10 days post-transplant + 15 days + 15 days. |
| **T3** | Invention Composition | 300cc/100L | To substrate | 10 days post-transplant. |

**Table 10B. Rooting level obtained in Experiment 10.**

| **Treatment** | **Average rooting¹ (%)** |
|---|---|
| **T0** | 50% |
| **T1** | 61% |
| **T2** | 55% |
| **T3** | 64% |

| | |
|---|---|
| ¹ Measurement of 15 random plants per treatment. | |

From the results, it was observed that the percentage of root exploration of the bread with substrate showed an increase in exploration with the application of the composition of the invention. The highest average was obtained by T3, corresponding to an application directed to the substrate, having an increase of 14% of exploration with respect to the control. There were no statistically significant differences between treatments.

Example 11: Plant height. Evaluation of the effect of the application of the composition of the invention on the height of rooted cuttings of the Nemaguard pattern.

To evaluate the effect of foliar application of the composition of the invention on the growth of Nemaguard cuttings 2 months after planting, the height of the plant obtained was evaluated. 3 trays of 72 cavities per treatment (60cc format) were applied, 216 plants in total per treatment.

**Table 11A. Summary of treatments applied in Experiment 11.**

| **Treatment** | **Product** | **Treatment** | **Application Moment** |
|---|---|---|---|
| **T0** | Negative Control | | - |
| **T1** | Invention Composition | 1 Foliar application of300cc/100L | 2 months after plantation |
| **T2** | Invention Composition | 2 Foliar application of 300cc/100L | 2 months after plantation + 15 days |
| **T3** | Invention Composition | 3 applications to substrate application of300cc/100L | 2 months after plantation + 15 days + 15 days |

**Table 11B. Average height of the plants obtained in Experiment 11.**

| **Treatment** | **Average Height¹ (cm)** |
|---|---|
| **T0** | 8.7 |
| **T1** | 10.1 |
| **T2** | 10.3 |
| **T3** | 10.1 |

| | |
|---|---|
| ¹ Measurement of 15 random plants per treatment. | |

From the results, it was observed a tendency for plant height to be greater in treatments with applications of the composition of the invention, the average increase was 17%. The number of applications showed no impact on the results. There were no statistically significant differences between treatments.

Example 12: Yield. Evaluation of the effect of the application of the composition of the invention on the yield of potato tubers in aeroponics.

An experiment (Experiment 12) was carried out to observe the effect of foliar application of the composition of the invention on potato plants in aeroponics, evaluating the yield of the tubers generated. A dilution of 1:100 equivalent to 3 L/ha with a wetting of 300 L/ha was evaluated. Table 12A details the treatments used in the experiment:

**Table 12A. Summary of treatments applied in Experiment 12.**

| **Treatment** | **Product** | **Dilution** | **Application Moment** |
|---|---|---|---|
| **T0** | Negative Control | - | - |
| **T1** | Invention Composition | 1:100 | Transplant day + 6 days + 9 days + 10 days + 7 days. |

The results obtained in Experiment 12 are shown in Table 12B.

**Table 12B. Experiment 12 yields.**

| **Treatment** | **Number of plants** | **Tubers over 15 mm in diameter** | **Average yield per plant (tubers over 15 mm in diameter)** |
|---|---|---|---|
| **T0** | 384 | 560 | 1.458 |
| **T1** | 132 | 213 | 1.613 |

Table 12B shows that the average yield per plant of tubers over 15 mm in diameter obtained. It showed an increase of 11% in the plants treated with the composition of the invention. These were marketable tubers, so the objective of Experiment 12 was precisely to increase this parameter, giving positive results.

## Claims

1. A biostimulant composition for agricultural application, CHARACTERIZED because it comprises vegetable extracts from berry leaves with a concentration of total polyphenols adjusted in a range between 4 and 12 g/L.

2. The composition according to claim 1, **CHARACTERIZED in that**, the berry leaves correspond totally or partially to blueberry leaves.

3. The composition according to claim 1, **CHARACTERIZED in that**, the main compounds comprise:
• Quercetin, myricetin, and isorhamnetin among flavonols and flavones; and
• Chlorogenic acid, caffeic acid, gallic acid, feruloylquinic acid, hydroxybenzoic acid, ferulic acid, coumaric acid, and resveratrol, among hydroxycinnamic acids, benzoic acids, and phenols.

4. The composition according to claim 1, **CHARACTERIZED in that**, it also comprises stabilizers, and preservatives or preservatives.

5. The composition according to claim 4, **CHARACTERIZED in that**, the stabilizers are vegetable gums and are selected from gellan, arabic, xanthan, locust bean, guar, tragacanth, karaya and tara gums.

6. The composition according to claim 4, **CHARACTERIZED in that**, the preservatives or preservatives are selected from sodium benzoate, potassium sorbate, calcium sorbate, sorbate salts and organic acids, such as propionic acid, lactic acid, acid citric, ascorbic acid, and acetic acid.

7. The composition according to claim 4, **CHARACTERIZED in that**, it is supplemented with macronutrients, such as nitrogen, phosphorus, potassium, carbon; secondary nutrients, such as calcium, magnesium, and sulfur; micronutrients, such as iron, manganese, copper, zinc, boron, molybdenum, and chlorine; or other nutrients, such as amino acids.

8. A process for preparing the composition of claim 1, **CHARACTERIZED in that**, it comprises the following steps:
a) mix the berry leaves with water in a solid:liquid weight ratio between 1:1 and 1:50 where the water is at a temperature between 20 and 90°C;
b) stir the mixture between 50 and 800 rpm for 0.5 to 12 hours;
c) optionally incorporating preservative additives or preservatives and stabilizers without stopping stirring;
d) stir the mixture between 50 to 800 rpm for up to additional 30 min;
e) separating the solids and remains of dry leaves from the aqueous portion; and
f) adjust the concentration of total polyphenols in a range between 4 and 12 g/L of the composition.

9. The process according to claim 8, **CHARACTERIZED in that**, before being processed, the berry leaves are subjected to drying and grinding.

10. The process according to claim 8, **CHARACTERIZED in that**, the drying step can be carried out in the shade or in the sun, in a stove, by microwave, by cold or hot air; or by lyophilization.

11. The process according to claim 8, **CHARACTERIZED in that**, the water used in stage a) is preferably between 40 and 60°C.

12. The process according to claim 8, **CHARACTERIZED in that**, the agitation in stage b) is preferably carried out between 1 and 3 hours.

13. The process according to claim 8, **CHARACTERIZED in that**, the separation in stage c) is carried out by filtration, centrifugation, or decantation.

14. The process according to claim 8, **CHARACTERIZED in that**, it contemplates adding the necessary supplements or nutrients to the composition according to the desired formulation.

15. The use of the composition according to any of claims 1 to 7, **CHARACTERIZED in that**, it is used to prepare biostimulant formulations for agricultural crops.

16. The use of the composition according to any of claims 1 to 7, **CHARACTERIZED in that**, it is used to prepare formulations with antimicrobial activity, where they preferably have activity against *Bacillus sp, Enterobacter aerogenes, Salmonella sp, Staphylococcus aureus* and *Escherichia coli.*
